# EUROPEAN PATENT SPECIFICATION

(11) **EP 2 033 856 B1**
(45) Date of publication and mention of the grant of the patent: **25.08.2010**
(21) Application number: 08009980.7
(22) Date of filing: 30.05.2008
(51) Int. Cl.: B60R 22/405

(54) **Seat belt retractor and seat belt apparatus employing the same**
Sitzgurteinzug und Sitzgurtvorrichtung damit
Rétracteur de ceinture de sécurité et son appareil de ceinture de sécurité

(30) Priority: 04.09.2007 JP 2007229006
(43) Date of publication of application: 11.03.2009
(73) Proprietor: Takata Corporation, Tokyo 106-8510 (JP)
(72) Inventor: Hiramatsu, Koji, Tokyo 106-8510 (JP); Kanamori, Yasushi, Tokyo 106-8510 (JP); Hisaki, Masao, Tokyo 106-8510 (JP)
(74) Representative: Banzer, Hans-Jörg

(56) References cited:
- EP-A- 0 811 535
- EP-A- 0 934 856
- EP-A- 1 462 323
- EP-A- 1 683 692
- GB-A- 2 265 815
- GB-A- 2 269 308
- US-A- 5 826 813

## Description

### Technical Field of the Invention

The present invention relates to a technical field of a seat belt apparatus which is installed in a vehicle such as an automobile for restraining an occupant with a seat belt withdrawn from a seat belt retractor. More particularly, the present invention relates to a technical field of a seat belt retractor which is provided with at least a belt withdrawal sensor (so-called a webbing sensor) for preventing the seat belt from being withdrawn when the seat belt is rapidly withdrawn at a speed higher than the normal belt withdrawal speed for wearing the seat belt (that is, at a withdrawal acceleration larger than the normal withdrawal acceleration for wearing the seat belt) at the start of withdrawal of the seat belt and which can prevent occurrence of an end lock due to oscillation of the belt withdrawal sensor when the seat belt withdrawn is fully wound, and a seat belt apparatus employing the aforementioned seat belt retractor.

### Related Art

Conventionally, a seat belt apparatus installed in a vehicle such as an automobile restrains an occupant with a seat belt in the event of an emergency such as a collision in which a large deceleration acts on a vehicle so as to prevent the occupant from jumping out of a vehicle seat.

Such a seat belt apparatus generally comprises a seat belt retractor. Most of the conventional seat belt retractors are provided with a belt withdrawal sensor (so-called, a webbing sensor) which oscillates by rapid withdrawal of the seat belt to prevent the seat belt from being withdrawn. The belt withdrawal sensor may oscillate to occur an end lock when the withdrawn seat belt is fully wound. The end lock makes the normal withdrawal of the seat belt difficult.

For this, a seat belt retractor has been proposed which can prevent an end lock due to such a belt withdrawal sensor (see, for example, JP-A-09-058410).

The seat belt retractor disclosed in JP-A-09-058410 comprises a cam plate which rotates according to the rotation of a spool for winding up a seat belt. The cam plate has a helical long groove formed therein. The seat belt retractor also comprises an oscillation preventive member for preventing oscillation of the belt withdrawal sensor. The oscillation preventive member is arranged in such a manner that the oscillation preventive member is pivotally movable between an oscillation allowing position for allowing the oscillation of the belt withdrawal sensor and an oscillation preventing position for preventing the oscillation of the belt withdrawal sensor. The pivotal movement of the oscillation preventive member is controlled by a cam follower of the oscillation preventive member which is guided along the cam groove of the cam plate.

In this case, the pivotal movement of the oscillation preventive member is controlled such that the oscillation preventive member is pivotally moved toward the oscillation allowing position because of the rotation of the cam plate in the belt withdrawing direction by the withdrawal of the fully wound seat belt, while the oscillation preventive member is pivotally moved toward the oscillation preventing position because of the rotation of the cam plate in the belt winding direction by the winding of the withdrawn seat belt. When the withdrawn seat belt is fully wound, the oscillation preventive member is set to the oscillation preventing position so that the belt withdrawal sensor is not allowed to oscillate, thereby preventing an end lock. When the fully wound seat belt is withdrawn by a predetermined amount, the oscillation preventive member is set at the oscillation allowing position so that the belt withdrawal sensor is allowed to oscillate to exercise its function of preventing the withdrawal of the seat belt when the seat belt is rapidly withdrawn.

Furthermore, a seat belt retractor according to the preamble of claim 1 is known from US 5,826,813 A.

### Disclosure of the Invention

Problems to be solved by the Invention

By the way, in the seat belt retractor disclosed in JP-A-09-058410, the oscillation preventive member is always rotated while the spool is rotated for withdrawing and winding the seat belt. In addition, the amount of rotation of the oscillation preventive member between the oscillation allowing position and the oscillation preventing position is small relative to the amount of rotation of the spool which is relatively large. Accordingly, the cam groove should be long. To form the long cam groove, the number of the helical circles of the cam groove is required to be increased.

However, to increase the number of the helical circles of the cam groove, the outer diameter of the cam plate is consequently increased in order to ensure the space for formation of the cam groove. This leads to increase in size of the seat belt retractor.

Because of diversification of recent vehicles, the layout of seat belt apparatuses to be installed in vehicles becomes diverse. The combination of the range for forming the cam groove of the cam plate and the moving range of the oscillation preventive member generally depends on the layout of the seat belt apparatus. Accordingly, a large number of kinds of the combination of the range for forming the cam groove of the cam plate and the moving range of the oscillation preventive member are needed. However, in case of the seat belt retractor having a large size because of the large cam plate, it is difficult to effectively respond to the needs of large number of combinations.

The present invention was made under the aforementioned circumstances and an object of the present invention is to provide a seat belt retractor which can effectively prevent an end lock due to a belt withdrawal sensor and has a mechanism for preventing the end lock of which size is compact and to provide a seat belt apparatus employing the seat belt retractor.

### Means to solve the Problems

According to the present invention, this object is achieved by a seat belt retractor as defined in claim 1 and a seat belt apparatus as defined in claim 5. The dependent claims define preferred and advantageous embodiments of the invention.

To solve the aforementioned problems, a seat belt retractor according to the invention comprises a seat belt for restraining an occupant, a spool for winding up said seat belt, a locking mechanism which allows the rotation of said spool when said locking mechanism is not in operation and prevents the rotation of said spool in the belt withdrawing direction when said locking mechanism is in operation, a belt withdrawal sensor which is actuated when the seat belt is rapidly withdrawn at a speed higher than normal speed at the start of the withdrawal of said seat belt, and a lock actuation mechanism which actuates said locking mechanism according to the actuation of said belt withdrawal sensor, wherein said lock actuation mechanism comprises at least a lock gear which rotates together with said spool when said lock actuation mechanism is not in operation and rotates relative to said spool when said lock actuation mechanism is in operation, and which actuates said locking mechanism by the relative rotation between said lock gear and said spool when said lock actuation mechanism is in operation, and wherein said belt withdrawal sensor is disposed on said lock gear in such a manner as to allow said belt withdrawal sensor to oscillate between an inoperative position where said belt withdrawal sensor allows the rotation of said lock gear both in the belt winding direction and the belt withdrawing direction and an operative position where said belt withdrawal sensor prevents the rotation of said lock gear at least in the belt withdrawing direction, and is characterized by further comprising an oscillation preventive member for preventing the oscillation of said belt withdrawal sensor and an oscillation preventive member control mechanism for controlling the movement of said oscillation preventive member, wherein said oscillation preventive member is movable in a radial direction passing through the rotation center of said spool between an oscillation preventing position where said oscillation preventive member holds said belt withdrawal sensor at said inoperative position so as to prevent said belt withdrawal sensor from oscillating toward the operative position at least when said seat belt is fully or nearly fully wound and an oscillation allowing position where said oscillation preventive member allows the oscillation of said belt withdrawal sensor when a certain amount of said seat belt is withdrawn from the fully wound state, and wherein said oscillation preventive member control mechanism comprises a movement control member which rotates at a reduced speed lower than the speed of said spool to control the movement of said oscillation preventive member when said spool rotates.

A seat belt retractor according to an embodiment of the invention is
characterized by further comprising an emergency locking mechanism which detects a deceleration larger than the normal one when the deceleration acts on a vehicle and is thus actuated to prevent said spool from rotating in the belt withdrawing direction, an automatic locking mechanism which is actuated when said seat belt is fully withdrawn and prevents the withdrawal of said seat belt on the way of winding said seat belt after the seat belt is fully withdrawn until a certain amount of the seat belt is wound, and a lock switching mechanism for switching an emergency locking function mode in which an emergency locking function by said emergency locking mechanism is exercised and an automatic locking function mode in which an automatic locking function by said automatic locking mechanism is exercised, wherein said lock switching mechanism comprises a switching lever which is selectively set at either of an emergency locking position where said emergency locking function mode is set or an automatic locking position where said automatic locking function mode is set, and an eccentric gear which rotates when said spool rotates and at a speed lower than the rotation speed of said spool and which has switching lever control cam member for switching the setting position of said switching lever, and wherein said movement control member is composed of said eccentric gear and said oscillation preventive member is a member of which movement is controlled by the rotation of said eccentric gear to prevent the actuation of said belt withdrawal sensor when said seat belt is fully or nearly fully wound.

Further, a seat belt retractor according to the invention may be characterized in that said belt withdrawal sensor is provided with a ring member, and wherein said oscillation preventive member is a plurality of stoppers which press the inner periphery of said ring member to prevent the actuation of said webbing sensor when said seat belt is fully or nearly fully wound.

Furthermore, a seat belt retractor according to the invention may be characterized in that said stoppers are provided with a stopper biasing means for biasing said stopper in such a direction that said stoppers press said ring member.

Moreover, a seat belt apparatus according to the invention comprises at least a seat belt for restraining an occupant, a seat belt retractor which winds up said seat belt while allowing the withdrawal of said seat belt and is actuated in the event of an emergency so as to prevent the withdrawal of said seat belt, a tongue slidably supported by said seat belt withdrawn from said seat belt retractor, and a buckle which is fixed to a vehicle floor or a vehicle seat and to which said tongue can be detachably latched, and is characterized in that said seat belt retractor is a seat belt retractor as described above.

### Effects of the Invention

In the seat belt retractor of the present invention having the aforementioned structure, when the seat belt is fully or nearly fully wound, the oscillation preventive member is moved in the radial direction passing through the rotation center of the spool by the movement control member and is thus set at the oscillation preventing position. By the oscillation preventive member, therefore, the oscillation of the belt withdrawal sensor is prevented so that the belt withdrawal sensor is held at its inoperative position. Therefore, an end lock due to the belt withdrawal sensor can be prevented by a simple structure using the oscillation preventive member moving in the radial direction passing through the rotation center of the spool.

Particularly, since the movement control member for controlling the oscillation preventive member to move between the oscillation preventing position and the oscillation allowing position is adapted to rotate at a reduced speed when the spool rotates, the amount of rotation of the movement control member until the spool fully winds up the seat belt can be reduced, thereby achieving further simple structure of the movement control member and thus achieving a small compact design of the movement control member.

In this case, since the movement control member is composed of the eccentric gear of the lock switching mechanism for switching the seat belt retractor between the emergency locking function mode and the automatic locking function mode and the eccentric gear is a flat member, the small compact design of the movement control member can be further effectively achieved. In addition, since the eccentric gear of the lock switching mechanism is used as the movement control member, an exclusive control member for controlling the oscillation preventive member is not required. Accordingly, the number of parts of the seat belt retractor of the automatic locking type can be reduced even with the function of preventing an end lock due to the belt withdrawal sensor.

Further, since the belt withdrawal sensor is provided with the ring member and the oscillation preventive member is composed of stoppers which press the inner periphery of the ring member so as to prevent the actuation of the belt withdrawal sensor when the seat belt is fully or nearly fully wound, a conventional known belt withdrawal sensor can be employed without significant design change and a further simple structure is achieved because all that is required is to simply press the ring member by the stoppers. In addition, since the oscillation preventive member is the stoppers which have simple structure being controlled by the eccentric gear of the lock switching mechanism and simply move in the radial direction of the spool, the seat belt retractor can be flexibly and inexpensively adapted to various layouts of seat belt apparatuses with less kind of parts by suitably setting the movement distance of the stoppers relative to the eccentric gear.

Furthermore, the stoppers are biased in the direction pressing the ring member by means of the stopper biasing means. Therefore, the ring member of the belt withdrawal sensor can be locked with larger force.

On the other hand, according to the seat belt apparatus according to the invention, end locks in the seat belt retractor can be effectively prevented, thereby improving the operability of the seat belt and enabling smooth and stable action for wearing the seat belt by the occupant.

### Brief Explanation of the drawings

Fig. 1 is a perspective view schematically showing a seat belt apparatus comprising a seat belt retractor as an embodiment according to the present invention.
Fig. 2 is a vertical sectional view schematically showing the seat belt retractor of the embodiment according to the present invention.
Fig. 3 is an exploded perspective view of an ELR-ALR switching mechanism, an end lock preventive mechanism for a vehicle sensor, and an end lock preventive mechanism for a webbing sensor of the seat belt retractor of this embodiment.
Figs. 4(a), 4(b) are illustrations showing the behavior of the webbing sensor of the seat belt retractor of the embodiment, wherein Fig. 4(a) is an illustration showing the webbing sensor in its inoperative state, and Fig. 4(b) is an illustration showing the webbing sensor in its operative state.
Fig. 5 is an illustration showing the ELR-ALR switching mechanism, the end lock preventive mechanism for the vehicle sensor, and the end lock preventive mechanism for the webbing sensor of the seat belt retractor of this embodiment.
Figs. 6(a) and 6(b) are illustrations for explaining the end lock preventive mechanism for the webbing sensor of the seat belt retractor of this embodiment, wherein Fig. 6(a) is an explanatory view of stoppers and Fig. 6(b) is an explanatory view of cam grooves for controlling the stoppers.
Figs. 7(a)-7(d) are illustrations for explaining a part of switching action from the ELR function mode to the ALR function mode.
Figs. 8(a) and 8(b) are illustrations for explaining another part of the switching action from the ELR function mode to the ALR function mode.
Figs. 9(a)-9(d) are illustrations for explaining a part of the action of the end lock preventive mechanism for the vehicle sensor.
Figs. 10(a) and 10(b) are illustrations for explaining another part of the action of the end lock preventive mechanism for the vehicle sensor.
Figs. 11(i)(a) and 11(i)(b) are illustrations for explaining a part of the action of the end lock preventive mechanism for the fly wheel and Figs. 11(ii)(a) and 11(ii)(b) are illustrations for explaining a part of the behavior of a pair of stoppers and cam grooves for controlling the action of the end lock preventive mechanism for the fly wheel.
Figs. 12(i)(a) and 12(i)(b) are illustrations for explaining another part of the action of the end lock preventive mechanism for the fly wheel and Figs. 12(ii)(a) and 12(ii)(b) are illustrations for explaining another part of the behavior of the pair of stoppers and the cam grooves for controlling the action of the end lock preventive mechanism for the fly wheel.
Fig. 13(i)(a) is an illustration showing a remaining part of the action of the end lock preventive mechanism for the fly wheel and Fig. 13(ii)(a) is an illustration showing a remaining part of the behavior of the pair of stoppers and the cam grooves for controlling the action of the end lock preventive mechanism for the fly wheel.
Fig. 14 is an illustration showing stoppers of an alternative embodiment of the present invention.

### Best Modes for carrying out the Invention

Hereinafter, best modes for carrying out the present invention will be described with reference to the attached drawings.

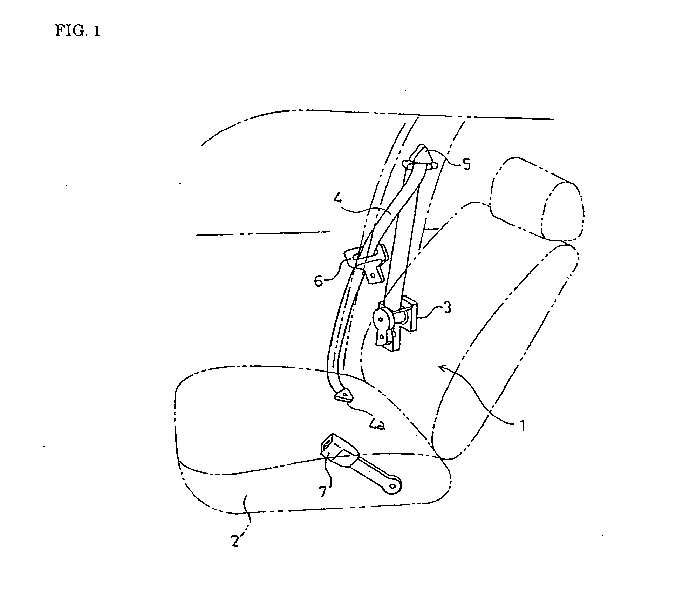

Fig. 1 is an illustration schematically showing a seat belt apparatus comprising a seat belt retractor as an embodiment according to the present invention.

As shown in Fig. 1, the seat belt apparatus 1 of this embodiment comprises, similarly to a conventionally known seat belt apparatus of a three-point type using a seat belt retractor, a seat belt retractor 3 which is fixed to a vehicle body near a vehicle seat 2, a seat belt 4 which is withdrawn from the seat belt retractor 3 and is provided at its end with a belt anchor 4a fixed to a vehicle floor or the vehicle seat 2, a deflection fitting 5 for guiding the seat belt 4 withdrawn from the seat belt retractor 3 toward an occupant's shoulder, a tongue 6 which is slidably supported by the seat belt 4 guided by and extending from the deflection fitting 5, and a buckle 7 which is fixed to the vehicle floor or the vehicle seat 2 and to which the tongue 6 can be inserted and detachably latched.

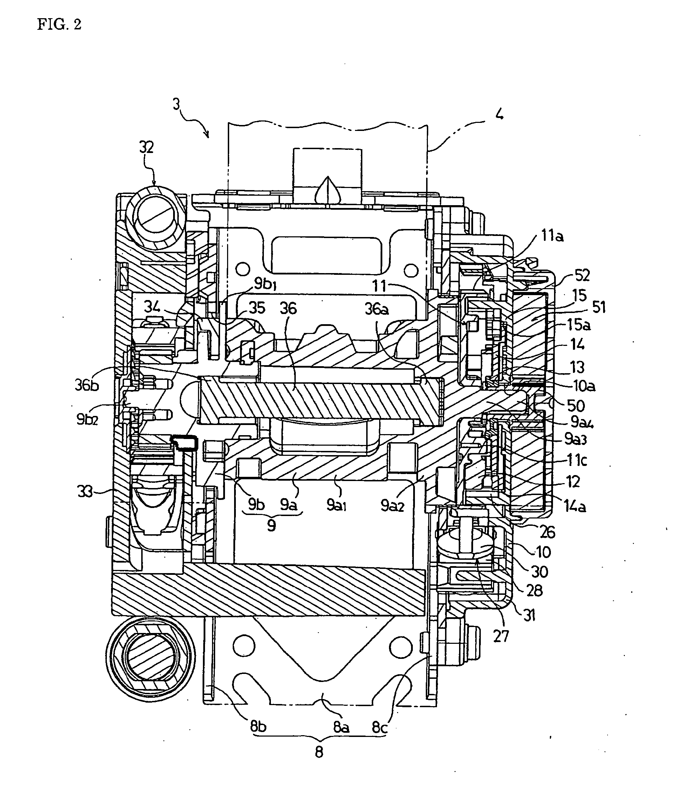

The seat belt retractor 3 of this embodiment comprises, similarly to the conventionally known typical seat belt retractor, a U-like frame 8 which is composed of a back wall 8a and left and right side walls 8b, 8c projecting from the both side edges of the back wall 8a in a direction perpendicular to the extending direction of the back wall 8a as shown in Fig. 2.

A spool 9 on which the seat belt 4 is wound is inserted through circular holes formed in the both side walls 8b, 8c of the frame 8 so that the spool 9 is rotatably disposed. The spool 9 comprises a first spool section 9a and a second spool section 9b which is coaxially and rotatably fitted into a left end portion of the first spool portion 9a. The first spool section 9a has a belt winding portion 9a₁, a flange portion 9a₂ which is formed at the right end of the belt winding portion 9a₁, and a rotary shaft 9a₃ which projects from the flange portion 9a₂ in the axial direction. The second spool section 9b has a flange portion 9b₁ and a rotary shaft 9b₂ which projects from the flange portion 9b₁ in the axial direction.

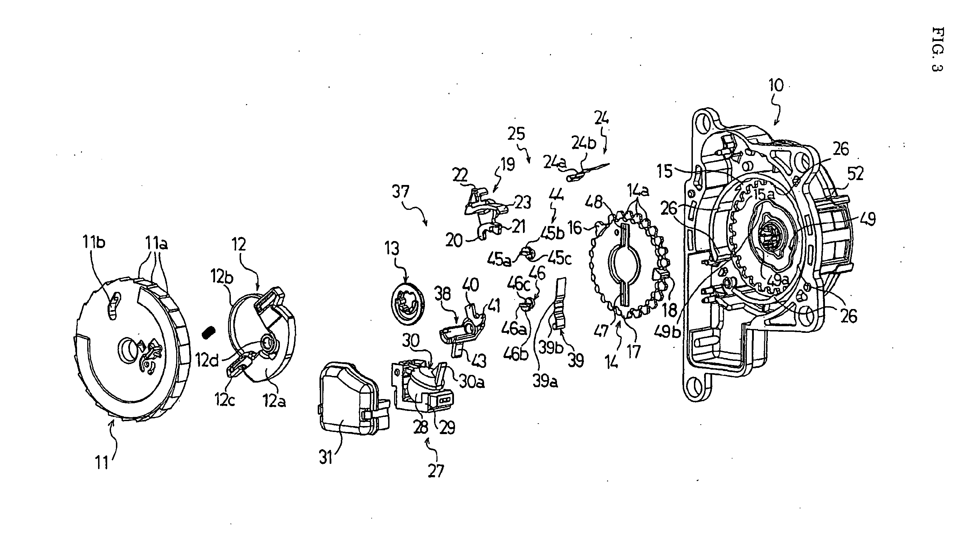

An end portion 9a₄ of the rotary shaft 9a₃ of the first spool section 9a is supported by a cover 52 of a casing 10 fixed to the side wall 8c via a bush 50 such that the rotary shaft 9a₃ rotates together with the bush 50. A lock gear 11 is coaxially fitted to the rotary shaft 9a₃. In this case, similarly to a conventionally known lock gear 11, the lock gear 11 rotates together with the rotary shaft 9a₃ when the lock gear 11 is not prevented from rotating. The rotary shaft 9a₃ rotates relative to the lock gear 11 when the lock gear 11 is prevented from rotating. As shown in Fig. 3, the lock gear 11 has a predetermined number of ratchet teeth 11a which are formed on the outer periphery thereof and are formed in an annular shape as a whole and also has a cam hole 11b which is formed in a side surface of the lock gear 11.

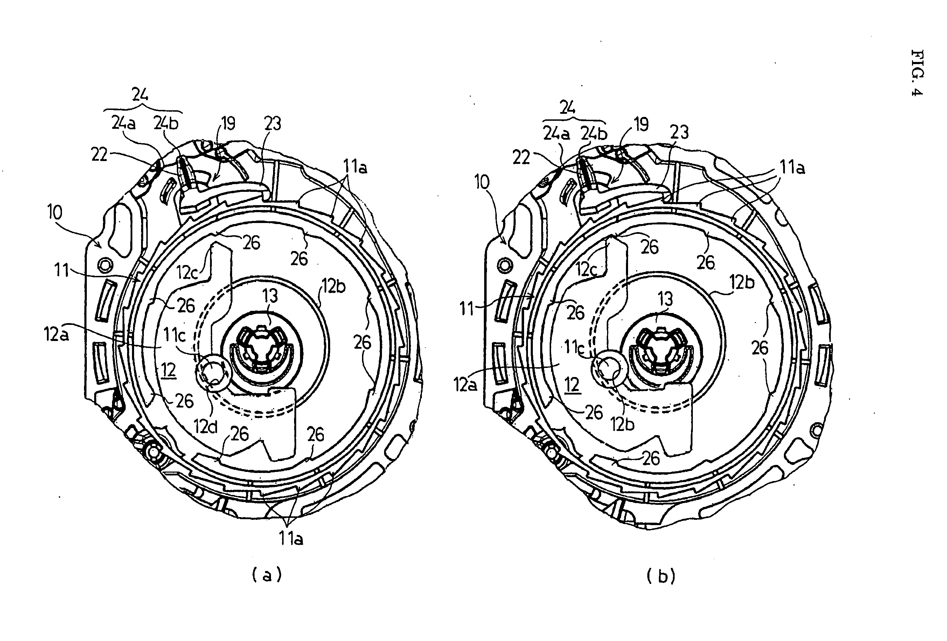

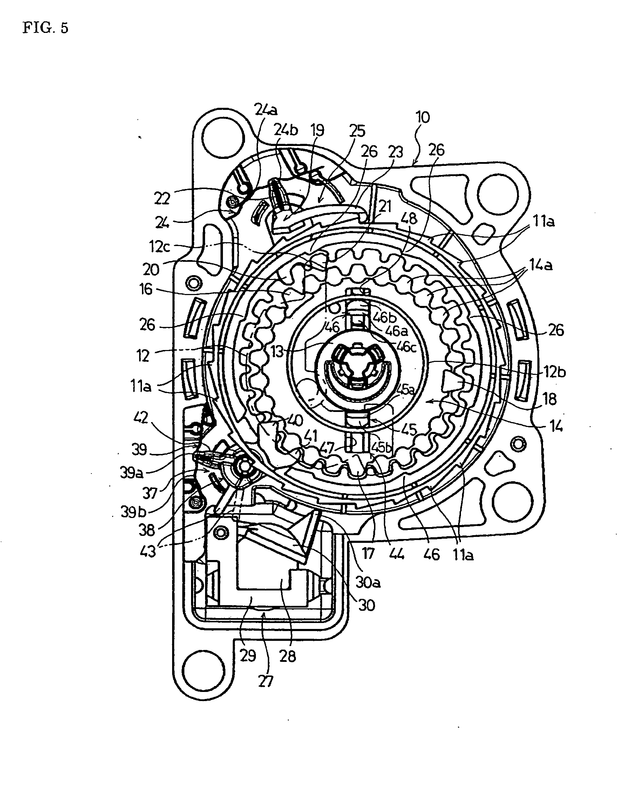

As shown in Fig. 2 and Fig. 3, a fly wheel 12 is oscillatably supported by the lock gear 11. The fly wheel 12 is an inertia member composing the belt withdrawal sensor (so-called webbing sensor). In this case, the fly wheel 12 comprises an inertial mass portion 12a and a ring portion 12b. The inertial mass portion 12a has a through hole 12d formed therein into which a projecting pin 11c formed on the lock gear 11 is fitted so that the fly wheel 12 is oscillatably supported. The inertial mass portion 12a has an engaging claw 12c formed thereon. The ring portion 12b is formed in an annular shape as shown in Figs. 4(a), 4(b), and Fig. 5.

Fitted and fixed to the rotary shaft 9a₃ of the first spool section 9a is an eccentric disk 13. An eccentric gear 14 is supported on the eccentric disk 13 such that the eccentric gear 14 is rotatable relative to the eccentric disk 13.

The eccentric gear 14 has a predetermined number of external teeth 14a. The external teeth 14a can mesh with internal teeth 15a of a ring gear 15 which is formed in the casing 10 coaxially with the spool 9 and of which outer diameter is larger than the outer diameter of the eccentric gear 14. The eccentric gear 14 has a first lever operation cam 16, a second lever operation cam 17, and a third lever operation cam 18.

As shown in Fig. 3 and Fig. 4(a), rotatably supported on the casing 10 is a switching lever 19. The switching lever 19 has an engaging lever 20 and a disengaging lever 21. The switching lever 19 also has a projection 22 and an engaging arm 23 projecting toward the disengaging lever 21. The projection 22 is engaged with either one of two first and second concavities 24a, 24b as curves respectively formed in a switching lever position control spring 24 composed of a plate spring, thereby positioning the switching lever 19.

That is, when the projection 22 is engaged with the first concavity 24a, the switching lever 19 is placed and held at such a position that the engaging lever 20 is allowed to be in contact with the first lever operation cam 16. In this case, the engaging arm 23 is set at such a position that the engaging arm 23 is not allowed to be engaged with any one of the ratchet teeth 11a of the lock gear 11, whereby the seat belt retractor 3 is set in a state that the seat belt retractor 3 exercises the ELR function. When the projection 22 is engaged with the second concavity 24b, the switching lever 19 is placed and held at such a position that the disengaging lever 21 is allowed to be in contact with the second lever operation cam 17. In this case, the engaging arm 23 is set at such a position that the engaging arm 23 is allowed to be engaged with one of the ratchet teeth 11a when the lock gear 11 rotates in the belt withdrawing direction. Then, the engaging arm 23 is engaged with one of the ratchet teeth 11a by the rotation of the lock gear 11 in the belt withdrawing direction, thereby preventing the rotation of the spool 9 in the belt withdrawing direction. Accordingly, the seat belt retractor 3 is set in a state that the retractor 3 exercises the ALR function.

The eccentric disk 13, the eccentric gear 14, the ring gear 15, the first lever operation cam 16, the second lever operation cam 17, the switching lever 19, and the switching lever position control spring 24 cooperate together to compose an ELR-ALR switching mechanism 25. Since detailed structure and detailed operation of the ELR-ALR switching mechanism 25 are described in the publication JP-A-2004-262447 and thus can be readily understood with reference to the publication, these will be omitted.

Similarly to the conventionally known webbing sensor, the fly wheel 12 is arranged such that the engaging claw 12c can be engaged with any one of the predetermined number of the ratchet teeth 26 as internal teeth formed in the casing 10 and arranged in an annular shape. In this case, when the seat belt retractor 3 is not in operation (the seat belt 4 is fully wound) and the seat belt 4 is withdrawn at a withdrawing acceleration equal to or lower than a normal withdrawing acceleration for wearing the seat belt, the fly wheel 12 rotates together with the lock gear 11 (i.e. the spool 9) and is held at such a position as shown in Fig. 4(a) that the engaging claw 12c is not allowed to be engaged with any one of the ratchet teeth 26. When the seat belt 4 is rapidly withdrawn at a relatively large withdrawing acceleration exceeding the aforementioned normal withdrawing acceleration, the fly wheel 12 oscillates relative to the rotation of the lock gear 11 (i.e. the spool 9) because of inertial delay of the inertial mass portion 12a and is set at such a position as shown in Fig. 4(b) that the engaging claw 12c is engaged with one of the ratchet teeth 26. Therefore, when the seat belt 4 is rapidly withdrawn, the rotation of the spool 9 in the belt withdrawing direction is prevented so as not to allow the withdrawal of the seat belt 4.

Further, as shown in Fig. 2 and Fig. 3, a vehicle sensor 27 as a deceleration detecting mechanism is attached to the side wall 8c. The vehicle sensor 27 is a conventionally known vehicle sensor and comprises an inertia ball 28 which is actuated when a large deceleration is applied to the vehicle such as the event of a vehicle collision, a casing 29 which is attached to the side wall 8c to support the inertia ball 28, an actuator 30 which is pivotally mounted to the casing 29 and is actuated by the actuation of the inertia ball 28, and a cover 31 which is attached to the casing 29. In this case, the actuator 30 has an engaging claw 30a. When the inertia ball 28 is not actuated, the engaging claw 30a is held at such a position that the engaging claw 30a is not allowed to be engaged with any one of the ratchet teeth 11a of the lock gear 11. When the inertia ball 28 is actuated, the engaging claw 30a is set at such a position that the engaging claw 30a is allowed to be engaged with one of the ratchet teeth 11a. When the engaging claw 30a is not engaged with any one of the ratchet teeth 11 a, the lock gear 11 is allowed to rotate in both the belt winding direction and the belt withdrawing direction. When the engaging claw 30a is engaged with one of the ratchet teeth 11a, the lock gear 11 is prevented from rotating in the belt withdrawing direction.

Disposed on the side wall 8b is a conventionally known pretensioner 32. The rotary shaft 9b₂ of the second spool section 9b is rotatably supported by a casing 33 for the pretensioner 32. The pretensioner 32 is actuated in the event of an emergency. The operational force of the pretensioner 32 is transmitted to the second spool section 9b so that the spool 9 is rotated in the belt winding direction. Therefore, the seat belt 4 is wound up at an early stage of the emergency, thereby increasing the belt tension.

Rotatably supported by the second spool section 9b is a conventionally known pawl 34. The pawl 34 can be engaged with one of a predetermined number of teeth 35 formed in the inner periphery of the opening of the side wall 8b. When the first spool section 9a and the lock gear 11 rotate together in the belt withdrawing direction, the pawl 34 is held at such a position that the pawl 34 is not allowed to be engaged with any one of the teeth 35. When the first spool section 9a rotates in the belt withdrawing direction relative to the lock gear 11, the pawl 34 is set by a control member (not shown), which is controlled by a cam hole 11b of the lock gear 11, at such a position that the pawl 34 is allowed to be engaged with one of the teeth 35. When the pawl 34 is not engaged with any one of the teeth 35, the second spool section 9b is allowed to rotate in both the belt winding direction and the belt withdrawing direction. When the pawl 34 is engaged with one of the teeth 35, the second spool section 9b is not allowed to rotate at least in the belt withdrawing direction. The pawl 34 and the teeth 35 cooperate together to compose a locking mechanism of the present invention. The lock gear 11 composes a lock actuation mechanism of the present invention. Since the operation control of the pawl 34 by the control member and the cam hole 11 b is conventionally known and is easily structured, and is not characterizing portion of the present invention even though it is a component of the present invention, the detailed description thereof will be omitted.

As shown in Fig. 2, a conventionally known torsion bar 36 is disposed to extend between the first and second spool sections 9a, 9b. The right end portion 36a as seen in Fig. 2 of the torsion bar 36 is adapted to rotate together with the first spool section 9a and the left end portion 36b as seen in Fig. 2 of the torsion bar 36 is adapted to rotate together with the second spool section 9b.

When the pawl 34 is engaged with one of the teeth 35 in the event of an emergency and the second spool section 9b is thus prevented from rotating in the belt withdrawing direction, the first spool section 9a is about to rotate in the belt withdrawing direction because the seat belt 4 is withdrawn by inertia of the occupant, the torsion bar 36 is torsionally deformed so as to absorb impact energy applied to the occupant by the seat belt 4.

By the way, the seat belt retractor 3 of this embodiment is provided with an end lock preventive mechanism for preventing an end lock as mentioned above which may occur due to the operation of the actuator 30 of the vehicle sensor 27 or the operation of the fly wheel 12 of the webbing sensor.

As shown in Fig. 3 and Fig. 5, the end lock preventive mechanism (corresponding to the first end lock preventive mechanism of the present invention) 37 for the vehicle sensor 27 comprises an end lock preventive lever 38, an end lock preventive lever position control spring 39 composed of a plate spring, an eccentric ring 13, and an eccentric gear 14.

The end lock preventive lever 38 is rotatably supported on the casing 10. The end lock preventive lever 38 has a locking lever 40 and an unlocking lever 41. The end lock preventive lever 38 has a projection 42 and an end lock preventive arm 43. The projection 42 is engaged selectively with one of first and second concavities 39a, 39b as curves respectively formed in an end lock preventive lever position control spring 39, thereby positioning the end lock preventive lever 38.

That is, when the projection 42 is engaged with the first concavity 39a as shown in Fig. 5, the end lock preventive lever 38 is positioned and held at such a position that the third lever operation cam 18 of the eccentric gear 14 is allowed to be in contact with the locking lever 40 and is not allowed to be in contact with the unlocking lever 41. In this case, the end lock preventive arm 43 is set at an end lock prevention cancelling position shown by a solid line in Fig. 5 so as to set the actuator 30 of the vehicle sensor 27 to an operable state. When the projection 42 is engaged with the second concavity 39b, the end lock preventive lever 38 is positioned and held at such a position that the third lever operation cam 18 is allowed to be in contact with the unlocking lever 41 and is not allowed to be in contact with the locking lever 40. In this case, the end lock preventive arm 43 is set at an end lock preventing position shown by a two-dot chain line in Fig. 5 so that the end lock preventive arm 43 comes in contact with the actuator 30 of the vehicle sensor 27 so as to lock the actuator 30 at the inoperable position. Accordingly, the actuator 30 is set in the inoperable state.

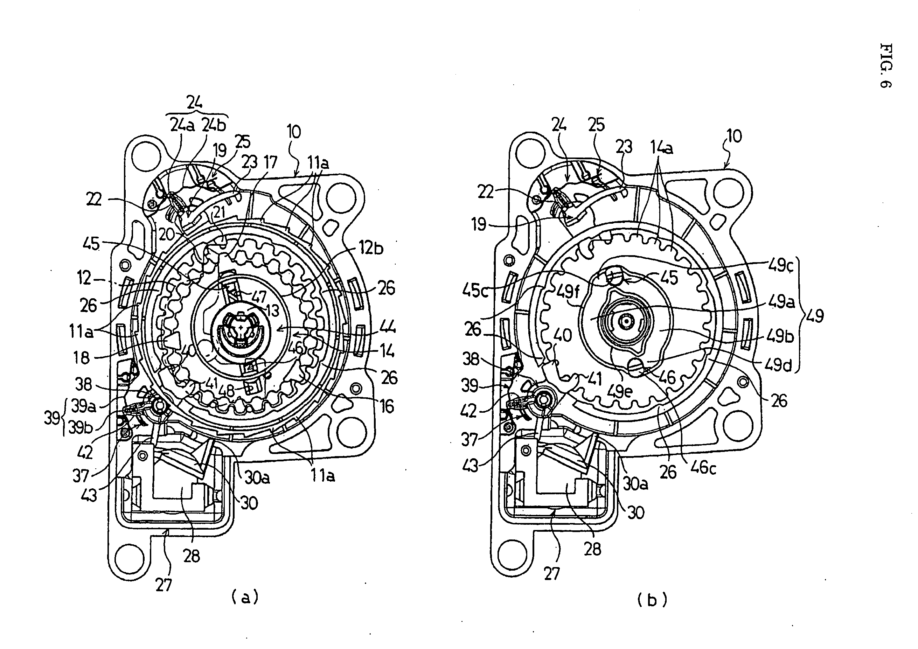

As shown in Fig. 3 and Figs. 6(a), 6(b), the end lock preventive mechanism (corresponding to the second end lock preventive mechanism of the present invention) 44 for the fly wheel 12 as the webbing sensor comprises a pair of stoppers 45, 46, the ring portion 12b of the fly wheel 12, the eccentric ring 13, the eccentric gear 14, a pair of guide grooves 47, 48 which are spaced from each other in the circumferential direction by an angle 180°so as to oppose each other and extend linearly, and a cam groove 49 formed in the casing 10.

The pair of stoppers 45, 46 are formed in completely the same configuration. Each stopper comprises a contact portion 45a, 46a which is allowed to be in contact with the inner periphery of the ring portion 12b of the fly wheel 12, a guided portion 45b, 46b which is guided to move along one of the pair of guide grooves 47, 48, and a cam follower 45c, 46c which moves along the cam groove 49.

The pair of guide grooves 47, 48 of the eccentric gear 14 guide the stoppers 45, 46 such that the guided portions 45b, 46b of the stoppers 45, 46 move in the radial direction of the eccentric gear 17. The stoppers 45, 46 compose an oscillation preventive member of the present invention.

The cam groove 49 of the casing 10 comprises a pair of small-diameter circular grooves 49a, 49b of which circle is coaxial with a circular hole 10a of the casing 10, through which the bush 50 passes, and is small, and a pair of large-diameter circular grooves 49c, 49d of which circle is also coaxial with the circular hole 10a and is large. The small-diameter circular grooves 49a, 49b and the large-diameter circular grooves 49c, 49d form a closed loop. In this case, the pair of small-diameter circular grooves 49a, 49b and the pair of large-diameter circular grooves 49c, 49d are alternately arranged in the circumferential direction of the circular hole 10a. The lengths in the circumferential direction of the pair of small-diameter circular grooves 49a, 49b are set to be equal to each other and the lengths in the circumferential direction of the pair of large-diameter circular grooves 49c, 49d are set to be equal to each other and shorter than the lengths in the circumferential direction of the small-diameter circular grooves 49a, 49b, respectively. The cam groove 49 of this embodiment is formed by an endless-type inner peripheral wall 49e and an endless-type outer peripheral wall 49f which project from the side wall of the casing 10 in the axial direction of the spool 9.

The cam follower 45c of the stopper 45 is positioned at one end side within the large-diameter circular groove 49c when the seat belt 4 is fully wound. In this state, the contact portion 45a is in contact with the inner periphery of the ring portion 12b to press the ring portion 12b in the outer radial direction.

Similarly, the cam follower 46c of the other stopper 46 is positioned at one end side within the large-diameter circular groove 49d when the seat belt 4 is fully wound. In this state, the contact portion 46a is in contact with the inner periphery of the ring portion 12b to press the ring portion 12b in the outer radial direction.

In this case, the cam follower 45c is positioned within the small-diameter circular groove 49a when the other cam follower 46c is positioned within the other small-diameter circular groove 49b. On the other hand, the cam follower 45c is positioned within the large-diameter circular groove 49c when the other cam follower 46c is positioned within the other large-diameter circular groove 49d. That is, the positions of the pair of cam followers 45c, 46c are controlled in synchronization with each other. Therefore, the contact portions 45a, 46a of the pair of stoppers 45, 46 come in contact with the inner periphery of the ring portion 12b to press the inner periphery in the outer radial direction simultaneously. Since the inner periphery of the ring portion 12b are pressed by the pair of contact portions 45a, 46a, the fly wheel 12 is set in the locked state where the fly wheel 12 can not oscillate. The eccentric gear 14, the guide grooves 47, 48, and the cam groove 49 cooperate together to compose an oscillation preventive member control mechanism of the present invention.

A conventionally known spring mechanism 51 as a spring mechanism is attached to the casing 10. The biasing force of the spring mechanism 51 is transmitted to the spool 9 via the bush 50, whereby the spring mechanism 51 always biases the spool 9 in the belt winding direction. By the biasing force of the spring mechanism 51, the seat belt 4 is fully wound onto the spool 9 when the seat belt is not used.

Hereinafter, respective actions of the ELR-ALR switching mechanism 25, the end lock preventive mechanism 37 for the vehicle sensor 27, and the end lock preventive mechanism 44 for the fly wheel (webbing sensor) 12 will be described.

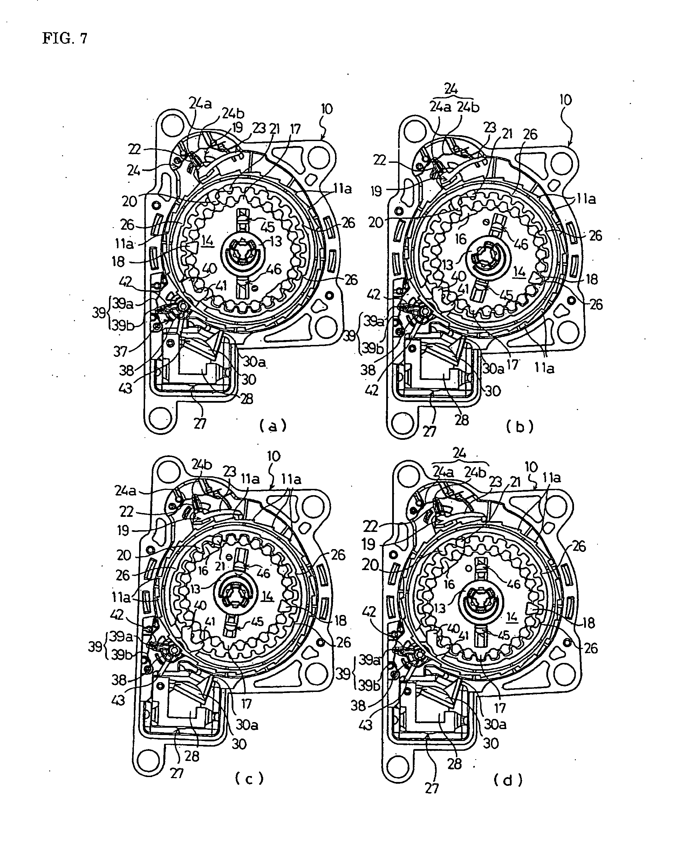

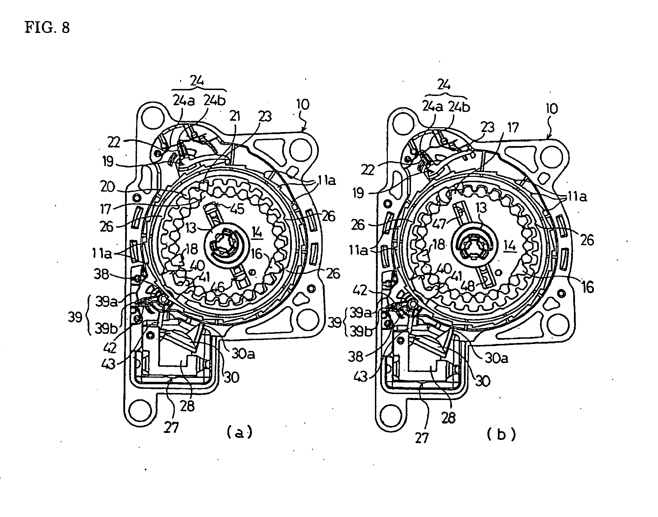

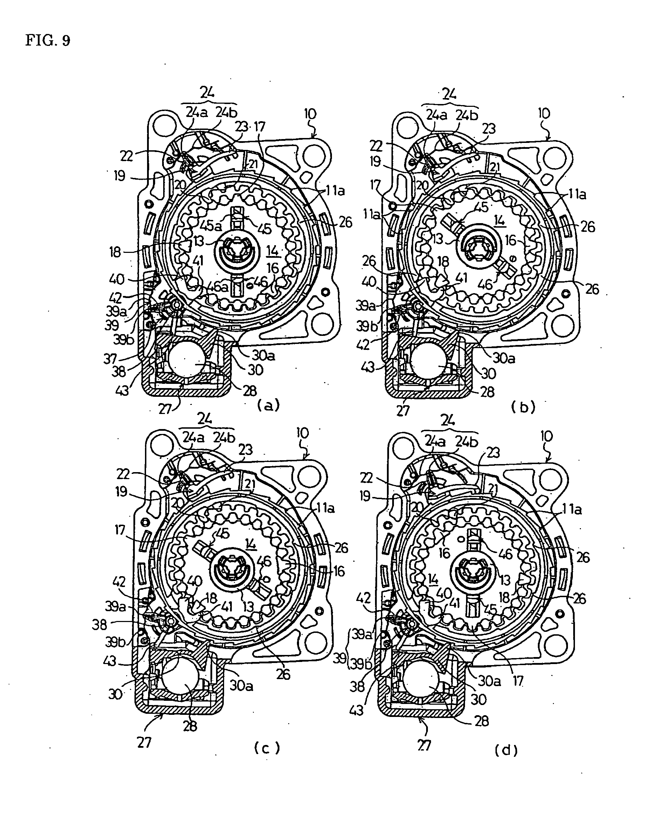

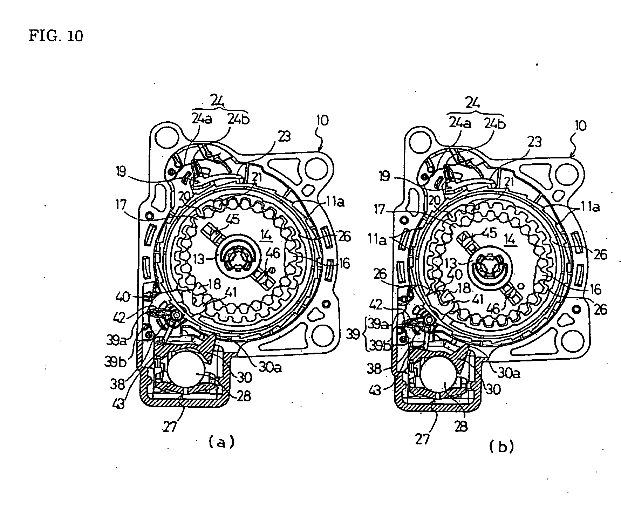

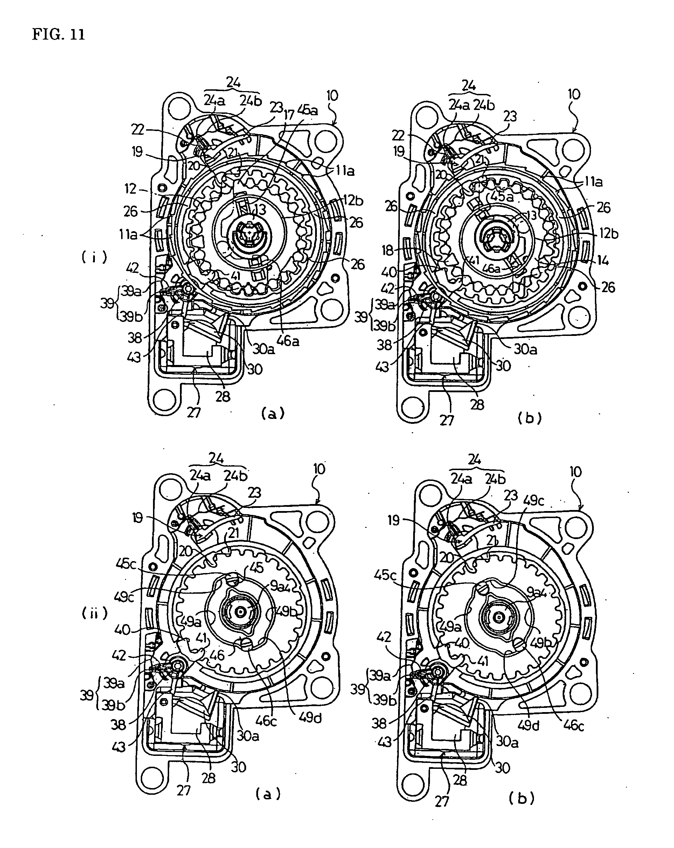

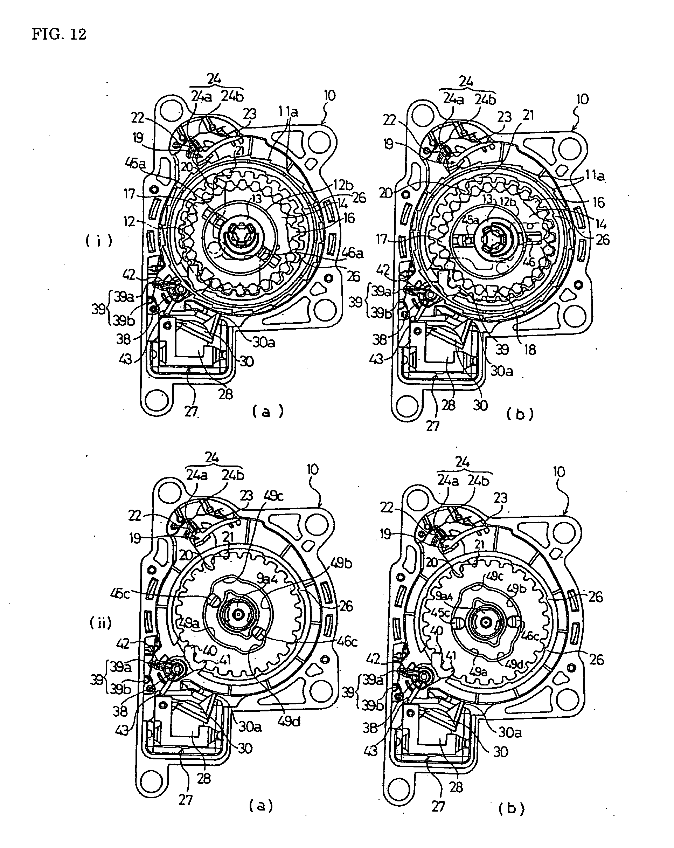

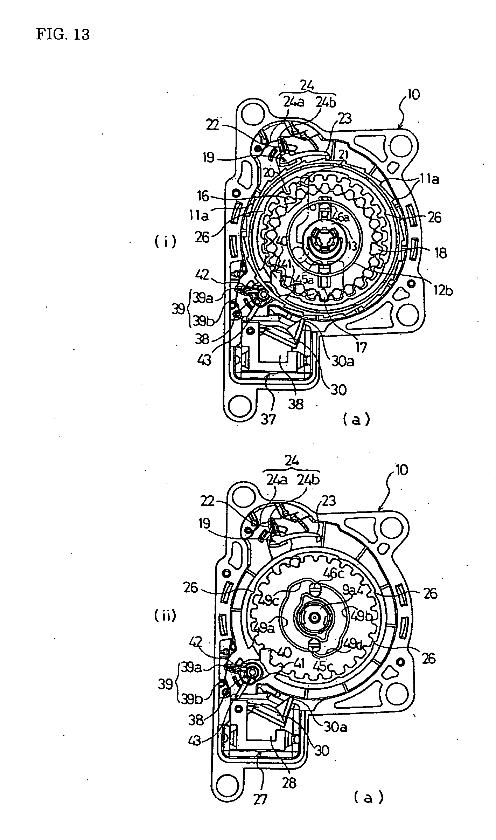

Figs. 7(a)-7(d) and Figs. 8(a)-8(b) are illustrations for explaining the switching actions from the ELR function mode to the ALR function mode. Figs. 9(a)-9(d) and Figs. 10(a) and 10(b) are illustrations for explaining the actions of the end lock preventive mechanism 37 for the vehicle sensor 27. Figs. 11(i)(a) and 11(i)(b), Figs. 12(i)(a) and 12(i)(b), and Fig. 13(i)(a) are illustrations for explaining the actions of the end lock preventive mechanism 44 for the fly wheel 12. Figs. 11(ii)(a) and 11(ii)(b), Figs. 12(ii)(a) and 12(ii)(b), and Fig. 13(ii)(a) are illustrations for explaining respective behaviors of the pair of stoppers 45, 46 and the cam groove 49 for controlling the actions of the end lock preventive mechanism 44 for the fly wheel 12.

When the seat belt 4 is fully wound by the seat belt retractor 3, the seat belt retractor 3 is set by the ELR-ALR switching mechanism 25 in a state where the seat belt retractor 3 can exercise the ELR mechanism. That is, the switching lever 19 is positioned such that the projection 22 is engaged with the first concavity 24a of the switching lever position control spring 24 as shown in Fig. 7(a). When the switching lever 19 is in this position, the first lever operation cam 16 is allowed to be in contact with the engaging lever 20 according to the eccentric position of the eccentric gear 14 and is not allowed to be in contact with the disengaging lever 21, while the second lever operation cam 17 is not allowed to be in contact with both the engaging lever 20 and the disengaging lever 21.

At this point, as shown in Fig. 9(a), the end lock preventive lever 38 of the end lock preventive mechanism 37 is positioned such that the projection 42 is engaged with the second concavity 39b of the end lock preventive lever position control spring 39. When the end lock preventive lever 38 is in this position, the third lever operation cam 18 is allowed to be in contact with the unlocking lever 41 according to the eccentric position of the eccentric gear 14 and is not allowed to be in contact with the locking lever 40. Therefore, in this state, the end lock preventive arm 43 of the end lock preventive lever 38 is set at the end lock preventing position so that the actuator 30 is set in the inoperative state.

Further, in this state, the contact portions 45a, 46a of the pair of stoppers 45, 46 of the end lock preventive mechanism 44 do not press the inner periphery of the ring portion 12b of the fly wheel 12.

As the seat belt 4 is started to be withdrawn from the seat belt retractor 3 in this state, the eccentric gear 14 starts to eccentrically rotate at a reduced speed in the belt winding direction (in the counterclockwise direction in Fig. 7(a)) opposite to the rotation of the spool 9. Soon, as shown in Fig. 11(ii)(a), the cam followers 45c, 46c of the pair of stoppers 45, 46 enter into the respective large-diameter circular grooves 49c, 49d. Then, as shown in Fig. 11(i)(a), the respective contact portions 45a, 46a press the inner periphery of the ring portion 12b so that the fly wheel 12 is locked from oscillating, that is, the fly wheel 12 is in its inoperable state.

As the seat belt 4 is further withdrawn, the pair of cam followers 45c, 46c further rotate in the belt winding direction so as to reach the ends of the large-diameter circular grooves 49c, 49d as shown in Fig. 11(ii)(b). While the pair of cam followers 45c, 46c are positioned within the respective large-diameter circular grooves 49c, 49d, as shown in Fig. 11(i)(b), the respective contact portions 45a, 46a continue pressing the ring portion 12b so as to maintain the lock of the fly wheel 12.

As the seat belt 4 is further withdrawn, the pair of cam followers 45c, 46c further rotate in the belt winding direction so as to come off the large-diameter circular grooves 49c, 49d and enter into the small-diameter circular grooves 49a, 49b as shown in Fig. 12(ii)(a). Accordingly, as shown in Fig. 12(i)(a), the respective contact portions 45a, 46a move apart from the inner periphery of the ring portion 12b so that the lock of the fly wheel 12 is cancelled. Therefore, the fly wheel 12 can oscillate and is thus in its operable state.

The rotational angle of the eccentric gear 14 from a point when the seat belt 4 is in the fully wound state to a point when the pair of cam followers 45c, 46c enter into the small-diameter circular grooves 49a, 49b as shown in Fig. 12(ii)(a) is about 60°. Therefore, the withdrawn amount of the seat belt 4 is slight. By the withdrawal of a slight amount of the seat belt 4 from the fully wound state, the fly wheel 12 is set from the inoperable state to the operable state, i.e. the state where the fly wheel 12 can exercise the same function as a conventional webbing sensor. Accordingly, when the seat belt 4 is withdrawn at a speed higher than that of the normal belt withdrawal for wearing the seat belt, the fly wheel 12 is actuated and the engaging claw 12c is thus engaged with one of the ratchet teeth 26, thereby preventing the lock gear 11 from rotating in the belt withdrawing direction. Therefore, since the spool 9 rotates relative to the lock gear 11 in the belt withdrawing direction, the pawl 34 is engaged with one of the internal teeth 35 of the side wall 8b, thereby preventing the second spool section 9b from rotating in the belt withdrawing direction. As a result, the withdrawal of the seat belt 4 is prevented.

At a point when the pair of cam followers 45c, 46c enter into the small-diameter circular grooves 49a, 49b, the third lever operation cam 18 comes in contact with the unlocking lever 41 of the end lock preventive lever 38 as shown in Fig. 9(b). After that, as the seat belt 4 is further withdrawn, the third lever operation cam 18 presses the unlocking lever 41 as shown in Fig. 9(c), whereby the end lock preventive lever 38 is pivotally moved so that the projection 42 thereof comes off the second concavity 39b of the end lock preventive lever position control spring 39 and is engaged with the first concavity 39a. Therefore, the end lock preventive arm 43 of the end lock preventive lever 38 is set and held at the end lock prevention cancelling position so that the actuator 30 of the vehicle sensor 27 becomes in its operable state. Accordingly, in the event of an emergency such as a vehicle collision where a large deceleration is applied to the vehicle, similarly to the conventional vehicle sensor, the actuator 30 is actuated by movement of the inertia ball 28 so as to allow the engaging claw 30a to be engaged with one of the ratchet teeth 11a of the lock gear 11. By rotation of the lock gear 11 in the belt withdrawing direction by the withdrawal of the seat belt 4, one of the ratchet teeth 11a engages the engaging claw 30a, thereby preventing the lock gear 11 from rotating in the belt withdrawing direction. As a result, since the spool 9 rotates relative to the lock gear 11 in the belt withdrawing direction, the pawl 34 is engaged with one of the internal teeth 35 of the side wall 8b, thereby preventing the second spool section 9b from rotating in the belt withdrawing direction. Fig. 9(c) shows the actuator 30 in its operative state.

However, since the first spool section 9a further rotates in the belt withdrawing direction because the seat belt 4 is withdrawn by inertia of the occupant, the torsion bar 36 torsionally deforms similarly to a conventionally known torsion bar. The torsional deformation of the torsion bar 36 absorbs impact energy applied to the occupant by the seat belt 4.

As the seat belt 4 is further withdrawn, the third lever operation cam 18 passes through the end lock preventive lever 38 as shown in Fig. 12(i)(b). At this point, the end lock preventive lever 38 is held at the end lock prevention cancelling position so that the vehicle sensor 27 is maintained in its operable state. As shown in Fig. 12(ii)(b), the pair of cam followers 45c, 46c further rotate in the belt winding direction so as to move within the small-diameter circular grooves 49a, 49b. Therefore, as shown in Fig. 12(i)(b), the contact portion 45a as one of the contact portions is held in a state spaced from the inner periphery of the ring portion 12b, thereby maintaining the fly wheel 12 in its operable state.

As the seat belt 4 is further withdrawn, the eccentric gear 14 further eccentrically rotates in the belt winding direction so that the first lever operation cam 16 moves toward the engaging lever 20 of the switching lever 19. During this, the vehicle sensor 27 and the fly wheel 12 are maintained in their operable states.

Then, immediately before the seat belt 4 is fully withdrawn, as shown in Fig. 7(b), the first lever operation cam 16 comes in contact with the engaging lever 20 of the switching lever 19 and presses the engaging lever 20. Then, as shown in Fig. 7(c), the switching lever 19 pivotally moves so that the projection 22 of the switching lever 19 is engaged with the second concavity 24b of the switching lever position control spring 24. Accordingly, the switching lever 19 is positioned. That is, the engaging arm 23 of the switching lever 19 is held at such a position that the engaging arm 23 is allowed to be engaged with one of the ratchet teeth 11a of the lock gear 11. Accordingly, the seat belt retractor 3 is switched from the ELR function mode to the ALR function mode.

As the seat belt 4 is fully withdrawn, as shown in Fig. 7(d), one of the ratchet teeth 11a of the lock gear 11 is engaged with the engaging arm 23. Also in this state, the vehicle sensor 27 is maintained in its operable state as shown in Fig. 9(d) and the cam followers 45c, 46c of the stoppers 45, 46 are positioned at an end of the small-diameter circular groove 49a on the large-diameter circular groove 49d side and an end of the small-diameter circular groove 49b on the large-diameter circular groove 49c side, respectively, as shown in Fig. 13(ii)(a) so that the contact portions 45a, 46a are spaced apart from the inner periphery of the ring portion 12b as shown in Fig. 13(i)(a), that is, the fly wheel 12 is maintained in its operable state.

As the spool 9 is rotated in the belt winding direction from the state that the seat belt 4 is fully withdrawn, a certain amount of the seat belt 4 is wound onto the spool 9. During this, the lock gear 11 also rotates in the belt winding direction. When the lock gear 11 rotates in the belt winding direction, the engaging arm 23 slides on the ratchet teeth 11a and is not engaged with the ratchet teeth 11a. Therefore, the seat belt 4 is smoothly wound onto the spool 9. If the seat belt 4 is tried to be withdrawn after a predetermined amount of the seat belt 4 is wound, both the spool 9 and the lock gear 11 are rotated in the belt withdrawing direction, but immediately one of the ratchet teeth 11a of the lock gear 11 is engaged with the engaging arm 23. Accordingly, the spool 9 and the lock gear 11 are prevented from rotating in the belt withdrawing direction so that the seat belt 4 is not allowed to be withdrawn. In this manner, the seat belt retractor 3 exercises the ALR function. By the rotation of the spool 9 in the belt winding direction, the eccentric gear 14 eccentrically rotates in the belt withdrawing direction.

As the seat belt 4 is further wound, the third lever operation cam 18 gradually comes closer to the locking lever 40 of the end lock preventive lever 38. By further winding of the seat belt 4, as shown in Fig. 10(a), the third lever operation cam 18 comes in contact with the locking lever 40 and presses the locking lever 40. Then, as shown in Fig. 10(b), the end lock preventive lever 38 is pivotally moved so that the projection 42 of the end lock preventive lever 38 comes off the first concavity 39a and is engaged with the second concavity 39b of the end lock preventive lever position control spring 39. Therefore, the end lock preventive arm 43 of the end lock preventive lever 38 is set and hold at the end lock preventing position so that the actuator 30 of the vehicle sensor 27 becomes in its inoperable state. Since the seat belt retractor 3 is set in the ALR function mode, however, the withdrawal of the seat belt 4 is prevented in the event of an emergency as mentioned above.

As the seat belt 4 is further wound and closes to being fully wound, as shown in Fig. 8(a), the second lever operation cam 17 comes in contact with the disengaging lever 21 of the switching lever 19 and presses the disengaging lever 21. Then, as shown in Fig. 8(b), the switching lever 19 is pivotally moved so that the projection 22 of the switching lever 19 comes off the second concavity 24b and is engaged with the first concavity 24a of the switching lever position control spring 24. Therefore, the engaging arm 23 of the switching lever 19 is set at such a position that the engaging arm 23 is not allowed to be engaged with any one of the ratchet teeth 11a of the lock gear 11. Accordingly, the seat belt retractor 3 is switched from the ALR function mode to the ELR function mode.

As the seat belt 4 is further wound, as shown in Fig. 11(ii)(b), the cam followers 45c, 46c of the stoppers 45, 46 enter into the large-diameter circular grooves 49c, 49d from the small-diameter circular grooves 49a, 49b, respectively. Therefore, the contact portions 45a, 46a come in contact with the inner periphery of the ring portion 12b and press the inner periphery of the ring portion 12b to lock the fly wheel 12 so that the fly wheel 12 becomes in its inoperable state.

As the seat belt 4 is then fully wound, the rotation of the spool 9 is stopped and the rotation of the eccentric gear 14 is also stopped. In this state, the vehicle sensor 27 and the fly wheel 12 are in their inoperable states.

According to the seat belt retractor 3 of this embodiment, when the seat belt is fully or nearly fully wound, the pair of stoppers 45, 46 are moved in the radial direction passing through the rotation center of the spool 4 by the eccentric gear 14 and are thus set at the oscillation preventing position where the stoppers 45, 46 press the inner periphery of the ring portion 12b. By the stoppers 45, 46, therefore, the oscillation of the fly wheel 12 of the webbing sensor is prevented so that the fly wheel 12 is held at its inoperative position. Therefore, an end lock due to the webbing sensor can be prevented by a simple structure using the stoppers 45, 46 moving in the radial direction passing through the rotation center of the spool 4.

Particularly, the eccentric gear 14 is used as the movement control member for controlling the pair of stoppers 45, 46 to move between the oscillation preventing position of the fly wheel 12 where the stoppers 45, 46 press the inner periphery of the ring portion 12b and the oscillation allowing position of the fly wheel 12 where the stoppers 45, 46 do not press the inner periphery of the ring portion 12b, thereby achieving further simple structure of the mechanism for controlling the actuation of the pair of stoppers 45, 46 and thus achieving a small compact design of the movement control member.

In this case, since the eccentric gear 14 is a flat member, the small compact design of the movement control member can be further effectively achieved. In addition, an exclusive control member for controlling the pair of stoppers 45, 46 is not required. Accordingly, the number of parts of the seat belt retractor of the automatic locking type can be reduced even with the function of preventing an end lock due to the webbing sensor.

Further, since the fly wheel 12 is provided with the ring portion 12b and the inner periphery of the ring portion 12b is pressed by the stoppers 45, 46 so as to prevent the actuation of the fly wheel 12 when the seat belt 4 is fully or nearly fully wound, a conventional known fly wheel 12 can be employed without significant design change and the oscillation preventive mechanism can have a simple structure because all that is required is to simply press the ring portion 12b by the stoppers 45, 46. In addition, since the stoppers 45, 46 which have simple structure and simply move in the radial direction of the spool 4 are used, the seat belt retractor can be flexibly and inexpensively adapted to various layouts of seat belt apparatuses 1 with less kind of parts by suitably setting the movement distance of the stoppers 45, 46 relative to the eccentric gear 14.

On the other hand, according to the seat belt apparatus 1 of this embodiment, end locks in the seat belt retractor 3 can be effectively prevented, thereby improving the operability of the seat belt 4 and enabling smooth and stable action for wearing the seat belt 4 by the occupant.

Though the end lock preventive mechanism 44 for the webbing sensor (the fly wheel 12) is provided with the pair of stoppers 45, 46 and the pair of the guide grooves 47, 48, respectively, in the aforementioned embodiment, the present invention is not limited thereto. For example, two or more of stoppers for pressing the ring portion 12b and two or more of guide grooves for guiding the stoppers may be provided. In this case, the respective stoppers and the respective guide grooves may be formed at any positions in the circumferential direction of the eccentric gear 14. However, it is preferable to dispose the stoppers and the guide grooves at equal spaces in the circumferential direction of the eccentric gear 14 because the ring portion 12b can be pressed equally along the circumferential direction.

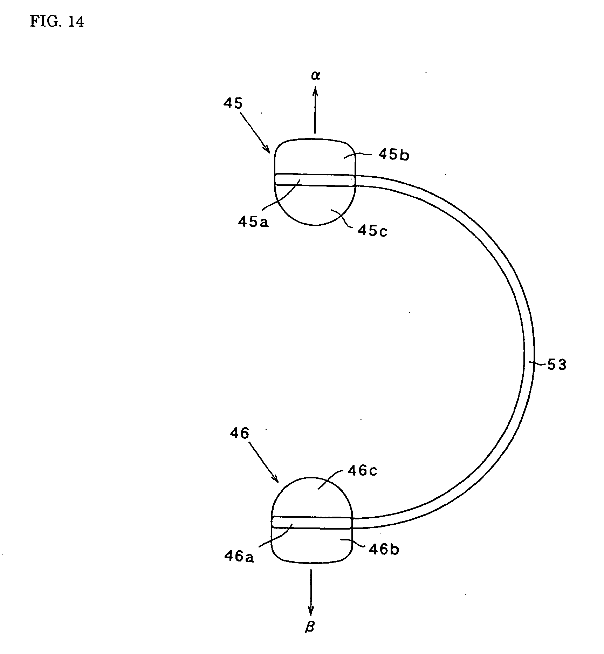

In addition, as shown in Fig. 14, the pair of stoppers 45, 46 may be adapted to press in outward radial directions α, β of the eccentric gear 14 by means of an elastic biasing member (corresponding to the stopper biasing means of the present invention) 53. Accordingly, the ring portion 12b of the fly wheel 12 can be locked by larger force. In this case, the pair of stoppers 45, 46 and the elastic biasing member 53 may be formed integrally from a resin or a metal. Alternatively, the pair of stoppers 45, 46 and the elastic biasing member 53 may be formed separately and the pair of stoppers may be connected by the elastic biasing member 53.

Though both of the two end lock preventive mechanisms 37, 44 are provided in the seat belt retractor in the aforementioned embodiment, only the end lock preventive mechanism 44 for preventing an end lock due to the fly wheel 12 may be provided.

Further, the present invention is not limited to the seat belt retractor having the ELR function and the ALR function as the aforementioned embodiment, the present invention can be adapted to a seat belt retractor having only the ELR function. Furthermore, the aforementioned embodiments are just illustrative examples for carrying out the seat belt retractor of the present invention so that the respective components of the seat belt retractor may be changed variously within a scope of claims of the present invention.

### Industrial Applicability

The seat belt retractor and the seat belt apparatus of the present invention are suitably used as a seat belt retractor in which an end lock due to a belt withdrawal sensor (webbing sensor) may occur, and a seat belt apparatus employing the seat belt retractor for restraining an occupant with a seat belt withdrawn from the seat belt retractor.

## Claims

1. A seat belt retractor comprising a seat belt (4) for restraining an occupant, a spool (9) for winding up said seat belt (4), a locking mechanism (34, 35) which allows the rotation of said spool (9) when said locking mechanism (34, 35) is not in operation and prevents the rotation of said spool (9) in the belt withdrawing direction when said locking mechanism (34, 35) is in operation, a belt withdrawal sensor (12) which is actuated when the seat belt (4) is rapidly withdrawn at a speed higher than normal speed at the start of the withdrawal of said seat belt (4), and a lock actuation mechanism (11) which actuates said locking mechanism (34, 35) according to the actuation of said belt withdrawal sensor (12), wherein
said lock actuation mechanism (11) comprises at least a lock gear (11) which rotates together with said spool (9) when said lock actuation mechanism (11) is not in operation and rotates relative to said spool (9) when said lock actuation mechanism (11) is in operation, and which actuates said locking mechanism (34, 35) by the relative rotation between said lock gear (11) and said spool (9) when said lock actuation mechanism (11) is in operation, and wherein
said belt withdrawal sensor (12) is disposed on said lock gear (11) in such a manner as to allow said belt withdrawal sensor (12) to oscillate between an inoperative position where said belt withdrawal sensor (12) allows the rotation of said lock gear (11) both in the belt winding direction and the belt withdrawing direction and an operative position where said belt withdrawal sensor (12) prevents the rotation of said lock gear (11) at least in the belt withdrawing direction,
**characterized in that**
said seat belt retractor (3) further comprises an oscillation preventive member (45, 46) for preventing the oscillation of said belt withdrawal sensor (12) and an oscillation preventive member control mechanism (14, 47-49) for controlling the movement of said oscillation preventive member (45, 46), wherein said oscillation preventive member (45, 46) is movable in a radial direction passing through the rotation center of said spool (9) between an oscillation preventing position where said oscillation preventive member (45, 46) holds said belt withdrawal sensor (12) at said inoperative position so as to prevent said belt withdrawal sensor (12) from oscillating toward the operative position at least when said seat belt (4) is fully or nearly fully wound and an oscillation allowing position where said oscillation preventive member (45, 46) allows the oscillation of said belt withdrawal sensor (12) when a certain amount of said seat belt (4) is withdrawn from the fully wound state, and wherein
said oscillation preventive member control mechanism (14, 47-49) comprises a movement control member (14) which rotates at a reduced speed lower than the speed of said spool (9) to control the movement of said oscillation preventive member (45, 46) when said spool (9) rotates.

2. A seat belt retractor as claimed in claim 1, further comprising an emergency locking mechanism (11, 27, 34, 35) which detects a deceleration larger than the normal one when the deceleration acts on a vehicle and is thus actuated to prevent said spool (9) from rotating in the belt withdrawing direction, an automatic locking mechanism which is actuated when said seat belt (4) is fully withdrawn and prevents the withdrawal of said seat belt (4) on the way of winding said seat belt (4) after the seat belt (4) is fully withdrawn until a certain amount of the seat belt (4) is wound, and a lock switching mechanism (25) for switching an emergency locking function mode in which an emergency locking function by said emergency locking mechanism (11, 27, 34, 35) is exercised and an automatic locking function mode in which an automatic locking function by said automatic locking mechanism is exercised, wherein
said lock switching mechanism (25) comprises a switching lever (19) which is selectively set at either of an emergency locking position where said emergency locking function mode is set or an automatic locking position where said automatic locking function mode is set, and an eccentric gear (14) which rotates when said spool (9) rotates and at a speed lower than the rotation speed of said spool (9) and which has switching lever control cam member for switching the setting position of said switching lever (19), and wherein
said movement control member is composed of said eccentric gear (14) and said oscillation preventive member (45, 46) is a member of which movement is controlled by the rotation of said eccentric gear (14) to prevent the actuation of said belt withdrawal sensor (12) when said seat belt (4) is fully or nearly fully wound.

3. A seat belt retractor as claimed in claim 1 or in claim 2, wherein said belt withdrawal sensor (12) is provided with a ring member (12b), and wherein said oscillation preventive member (45, 46) is a plurality of stoppers (45, 46) which press the inner periphery of said ring member (12b) to prevent the actuation of said webbing sensor (12) when said seat belt (4) is fully or nearly fully wound.

4. A seat belt retractor as claimed in claim 3, wherein said stoppers (45, 46) are provided with a stopper biasing means (53) for biasing said stopper (45, 46) in such a direction that said stoppers (45, 46) press said ring member (12b).

5. A seat belt apparatus comprising at least a seat belt (4) for restraining an occupant, a seat belt retractor (3) which winds up said seat belt (4) while allowing the withdrawal of said seat belt (4) and is actuated in the event of an emergency so as to prevent the withdrawal of said seat belt (4), a tongue (6) slidably supported by said seat belt (4) withdrawn from said seat belt retractor (3), and a buckle (7) which is fixed to a vehicle floor or a vehicle seat (2) and to which said tongue (6) can be detachably latched,
wherein said seat belt retractor (3) is a seat belt retractor (3) as claimed in any one of claims 1 through 4.

## Patentansprüche

1. Sitzgurtaufrollvorrichtung umfassend einen Sitzgurt (4) zum Zurückhalten eines Insassen, eine Spule (9) zum Aufwickeln des Sitzgurts (4), einen Verriegelungsmechanismus (34, 35), welcher die Drehung der Spule (9) ermöglicht, wenn der Verriegelungsmechanismus (34, 35) nicht in Betrieb ist, und die Drehung der Spule (9) in der Gurtherausziehrichtung verhindert, wenn der Verriegelungsmechanismus (34, 35) in Betrieb ist, einen Gurtherausziehsensor (12), welcher betätigt wird, wenn der Sitzgurt (4) mit einer höheren Geschwindigkeit als eine Normalgeschwindigkeit am Anfang des Herausziehens des Sitzgurts (4) schnell herausgezogen wird, und einen Verriegelungsbetätigungsmechanismus (11), welcher den Verriegelungsmechanismus (34, 35) gemäß der Betätigung des Gurtherausziehsensors (12) betätigt, wobei
der Verriegelungsbetätigungsmechanismus (11) mindestens eine Verriegelungseinrichtung (11) umfasst, welche sich zusammen mit der Spule (9) dreht, wenn der Verriegelungsbetätigungsmechanismus (11) nicht in Betrieb ist, und sich bezogen auf die Spule (9) dreht, wenn der Verriegelungsbetätigungsmechanismus (11) in Betrieb ist, und welche den Verriegelungsmechanismus (34, 35) durch die relative Drehung zwischen der Verriegelungseinrichtung (11) und der Spule (9) betätigt, wenn der Verriegelungsbetätigungsmechanismus (11) in Betrieb ist, und wobei
der Gurtherausziehsensor (12) an der Verriegelungseinrichtung (11) in einer derartigen Art und Weise angeordnet ist, dass er dem Gurtherausziehsensor (12) ermöglicht, zwischen einer unwirksamen Position, in welcher der Gurtherausziehsensor (12) die Drehung der Verriegelungseinrichtung (11) in sowohl der Gurtaufwickelrichtung als auch der Gurtherausziehrichtung ermöglicht, und einer Betriebsposition, in welcher der Gurtherausziehsensor (12) die Drehung der Verriegelungseinrichtung (11) zumindest in der Gurtherausziehrichtung verhindert, zu schwingen,
**dadurch gekennzeichnet, dass**
die Sitzgurtaufrollvorrichtung (3) ferner ein Schwingungsverhinderungselement (45, 46) zum Verhindern der Schwingung des Sitzgurtherausziehsensors (12) und einen Schwingungsverhinderungselementsteuermechanismus (14, 47-49) zum Steuern der Bewegung des Schwingungsverhinderungselements (45, 46) umfasst, wobei das Schwingungsverhinderungselement (45, 46) in einer radialen Richtung, welche durch das Drehzentrum der Spule (9) verläuft, zwischen einer Schwingungsverhinderungsposition, in welcher das Schwingungsverhinderungselement (45, 46) den Gurtherausziehsensor (12) in der unwirksamen Position hält, um zu verhindern, dass, zumindest wenn der Sitzgurt (4) vollständig oder fast vollständig aufgewickelt ist, der Sitzgurtherausziehsensor (12) in Richtung der Betriebsposition schwingt, und einer Schwingungszulassungsposition, in welcher das Schwingungsverhinderungselement (45, 46) das Schwingen des Sitzgurtherausziehsensors (12) zulässt, wenn ein bestimmter Betrag des Sitzgurts (4) von dem vollständig aufgewickelten Zustand herausgezogen ist, beweglich ist, und wobei der Schwingungsverhinderungselementsteuermechanismus (14, 47-49) ein Bewegungssteuerelement (14) umfasst, welches sich mit einer verringerten Geschwindigkeit geringer als die Geschwindigkeit der Spule (9) dreht, um die Bewegung des Schwingungsverhinderungselements (45, 46) zu steuern, wenn sich die Spule (9) dreht.

2. Sitzgurtaufrollvorrichtung nach Anspruch 1, ferner umfassend einen Notverriegelungsmechanismus (11, 27, 34, 35) welcher eine Verzögerung größer als die normale erfasst, wenn die Verzögerung auf ein Fahrzeug wirkt, und somit betätigt wird, um zu verhindern, dass die Spule (9) sich in der Gurtherausziehrichtung dreht, einen automatischen Verriegelungsmechanismus, welcher betätigt wird, wenn der Sitzgurt (4) vollständig herausgezogen ist und das Herausziehen des Sitzgurts (4) während eines Aufwickelns des Sitzgurts (4), nachdem der Sitzgurt (4) vollständig herausgezogen wurde, verhindert, bis ein bestimmter Betrag des Sitzgurts (4) aufgewickelt ist, und ein Verriegelungsschaltmechanismus (25) zum Ansteuern einer Notverriegelungsfunktionsbetriebsart, in welcher eine Notverriegelungsfunktion von dem Notverriegelungsmechanismus (11, 27, 34, 35) ausgeführt wird, und einer automatischen Verriegelungsfunktionsbetriebsart, in welcher eine automatische Verriegelungsfunktion von dem automatischen Verriegelungsmechanismus ausgeführt wird, wobei
der Verriegelungsschaltmechanismus (25) einen Schalthebel (19), welcher wahlweise in entweder eine Notverriegelungsposition, wo die Notverriegelungsfunktionsbetriebsart eingestellt ist, oder eine automatische Verriegelungsposition, wo die automatische Verriegelungsfunktionsbetriebsart eingestellt ist, eingestellt wird, und eine exzentrische Einrichtung (14), welche sich, wenn sich die Spule (9) dreht, mit einer geringeren Geschwindigkeit als die Drehgeschwindigkeit der Spule (9) dreht und welche ein Schalthebelsteuernockenelement zum Ansteuern der Einstellposition des Schalthebels (19) aufweist, umfasst, und wobei
das Bewegungssteuerelement, welches aus der exzentrischen Einrichtung (14) und dem Schwingungsverhinderungselement (45, 46) gebildet ist, ein Element ist, dessen Bewegung durch die Drehung der exzentrischen Einrichtung (14) gesteuert wird, um die Betätigung des Gurtherausziehsensors (12) zu verhindern, wenn der Sitzgurt (4) vollständig oder nahezu vollständig aufgewickelt ist.

3. Sitzgurtaufrollvorrichtung nach Anspruch 1 oder Anspruch 2, wobei der Gurtherausziehsensor (12) mit einem Ringelement (12b) versehen ist, und wobei das Schwingungsverhinderungselement (45, 46) mehrere Stopper (45, 46) aufweist, welche den Innenumfang des Ringelements (12b) drücken, um die Betätigung des Gurtbandsensors (12) zu verhindern, wenn der Sitzgurt (4) vollständig oder nahezu vollständig aufgewickelt ist.

4. Sitzgurtaufrollvorrichtung nach Anspruch 3, wobei die Stopper (45, 46) mit einem Stoppervorspannmittel (53) versehen sind, um die Stopper (45, 46) in einer derartigen Richtung vorzuspannen, dass die Stopper (45, 46) das Ringelement (12b) drücken.

5. Sitzgurtvorrichtung umfassend mindestens einen Sitzgurt (4) zum Zurückhalten eines Insassen, eine Sitzgurtaufrollvorrichtung (3) welche den Sitzgurt (4) aufwickelt während sie das Herausziehen des Sitzgurts (4) ermöglicht und in einem Notfall betätigt wird, um das Herausziehen des Sitzgurts (4) zu verhindern, eine Zunge (6), welche verschiebbar von dem Sitzgurt (4), welcher von der Sitzgurtaufrollvorrichtung (3) herausgezogen wurde, gehalten wird, eine Schnalle (7) welche an einem Fahrzeugboden oder einem Fahrzeugsitz (2) befestigt ist und in welche die Zunge (6) lösbar eingeklinkt werden kann,
wobei die Sitzgurtaufrollvorrichtung (3) eine Sitzgurtaufrollvorrichtung (3) nach einem der Ansprüche 1-4 ist.

## Revendications

1. Un enrouleur de ceinture de sécurité comprenant une ceinture de sécurité (4) pour retenir un passager, une bobine (9) pour enrouler ladite ceinture de sécurité (4), un mécanisme de verrouillage (34, 35) autorisant la rotation de ladite bobine (9) lorsque ledit mécanisme de verrouillage (34, 35) n'est pas en fonctionnement et qui empêche la rotation de ladite bobine (9) dans la direction d'extraction de la ceinture lorsque ledit mécanisme de verrouillage (34, 35) est en fonctionnement, un capteur d'extraction de ceinture (12) qui est activé lors de l'extraction rapide de la ceinture de sécurité (4) à une vitesse supérieure à une vitesse normale au début de l'extraction de ladite ceinture de sécurité (4), et à mécanisme d'activation de verrouillage (11) qui active ledit mécanisme de verrouillage (34, 35) en correspondance à l'activation dudit capteur d'extraction de la ceinture (12), dans lequel
ledit mécanisme d'activation de verrouillage (11) comprend au moins une roue de verrouillage (11) qui tourne avec ladite bobine (9) lorsque ledit mécanisme d'activation de verrouillage (11) n'est pas en fonctionnement et qui tourne par rapport à ladite bobine (9) lorsque ledit mécanisme d'activation du verrouillage (11) est en fonctionnement, et qui active ledit mécanisme de verrouillage (34, 35) suite à la rotation relative entre ladite roue de verrouillage (11) et ladite bobine (9) lorsque ledit mécanisme d'activation de verrouillage (11) est en fonctionnement, et dans lequel
ledit capteur d'extraction de ceinture (12) est disposé sur ladite roue de verrouillage (11) d'une façon telle à permettre l'oscillation dudit capteur d'extraction de ceinture (12) entre une position de non-fonctionnement où ledit capteur d'extraction de ceinture (12) permet la rotation de ladite roue de verrouillage (11) selon la direction d'enroulement de la ceinture ainsi que la direction d'extraction de la ceinture, et une position de fonctionnement où ledit capteur d'extraction de ceinture (12) empêchent la rotation de ladite roue de verrouillage (11) au moins selon la direction d'extraction de la ceinture, **caractérisé en ce que**
ledit enrouleur de ceinture de sécurité (3) comprend en outre un organe d'empêchement d'oscillation (45, 46) pour empêcher l'oscillation dudit capteur d'extraction de ceinture (12) et un mécanisme de commande d'organe d'empêchement d'oscillation (14, 47 à 49) pour contrôler le déplacement dudit organe d'empêchement d'oscillation (45, 46), dans lequel ledit organe d'empêchement d'oscillation (45, 46) est déplaçable selon une direction radiale passant par les centres de rotation de ladite bobine (9) entre une position d'empêchement d'oscillation où ledit organe d'empêchement d'oscillation (45, 46) maintient ledit capteur d'extraction de ceinture (12) à ladite position de non-fonctionnement pour empêcher l'oscillation dudit capteur d'extraction de ceinture (12) en direction de la position de fonctionnement au moins lorsque ladite ceinture de sécurité (4) est totalement, ou presque totalement enroulée et une position permettant son oscillation où ledit organe d'empêchement d'oscillation (45, 46) permet l'oscillation dudit capteur d'extraction de ceinture (12) lors de l'extraction d'une certaine longueur de ladite ceinture de sécurité (4) de l'état où elle est enroulée totalement, et dans lequel
ledit mécanisme de commande d'organes d'empêchement d'oscillation (14, 47 à 49) comprend un organe de réglage de déplacement (14) qui tourne à une vitesse réduite inférieure à la vitesse de ladite bobine (9) pour régler le déplacement dudit organe d'empêchement d'oscillation (45, 46) lors de la rotation de ladite bobine (9).

2. L'enrouleur de ceinture de sécurité selon la revendication 1, comprenant en outre un mécanisme de verrouillage d'urgence (11, 27, 34, 35) qui détecte une décélération plus importante que la décélération normale lors de la décélération du véhicule et en étant ainsi activé pour empêcher la rotation de ladite bobine (9) selon la direction d'extraction de la ceinture, un mécanisme de verrouillage automatique qui est activé lors de l'extraction totale de ladite ceinture de sécurité (4) et qui empêche l'extraction de ladite ceinture de sécurité (4) sur le trajet d'enroulement de ladite ceinture de sécurité (4) après l'extraction totale de la ceinture de sécurité (4) jusqu'à l'enroulement d'une certaine longueur de la ceinture de sécurité (4), et un mécanisme de commutation de verrouillage (25) pour la commutation de mode correspondant à une fonction de verrouillage d'urgence pour lequel est exercée une fonction de verrouillage d'urgence au moyen dudit mécanisme de verrouillage d'urgence (11, 27, 34, 35) et un mode correspondant à une fonction de verrouillage automatique pour lequel est exercé une fonction de verrouillage automatique par ledit mécanisme de verrouillage automatique, dans lequel
ledit mécanisme de commutation de verrouillage (25) comprend un levier de commutation (19) qui est réglé sélectivement soit à une position de verrouillage d'urgence où ledit mode correspondant à la fonction de verrouillage d'urgence est activé ou une position de verrouillage automatique où ledit mode correspondant à la fonction de verrouillage automatique est activé, et une roue d'engrenage excentrique (14) qui tourne lorsque ladite bobine (9) tourne à une vitesse inférieure à la vitesse de rotation de ladite bobine (9) et qui présente un organe formant came de commande du levier de commutation pour faire commuter la position dudit levier de commutation (19), et dans lequel
ledit organe de commande de déplacement est composé de ladite roue d'engrenage excentrique (14) et ledit organe d'empêchement d'oscillation (45, 46) est un organe dont le déplacement est commandé par la rotation de ladite roue d'engrenage excentrique (14) pour empêcher l'activation dudit capteur d'extraction de ceinture (12) lorsque ladite ceinture de sécurité (4) est totalement ou presque totalement enroulée.

3. L'enrouleur de ceinture de sécurité selon la revendication 1 ou la revendication 2, dans lequel ledit capteur d'extraction de ceinture (12) est muni d'un organe formant anneau (12b), et dans lequel ledit organe d'empêchement d'oscillation (45, 46) est une pluralité d'organes d'arrêt (45, 46) qui s'appuient contre la périphérie interne dudit organe formant anneau (12b) pour empêcher l'activation dudit capteur d'extraction de ceinture (12) lorsque ladite ceinture de sécurité (4) est totalement ou presque totalement enroulée.

4. L'enrouleur de ceinture de sécurité selon la revendication 3, dans lequel lesdits organes d'arrêt (45, 46) sont munis de moyens de sollicitation (53) pour solliciter ledit organe d'arrêt (45, 46) dans une direction telle que lesdits organes d'arrêt (45, 46) s'appuient contre ledit organe formant anneau (12b).

5. Un dispositif formant ceinture de sécurité comprenant au moins une ceinture de sécurité (4) pour retenir un passager, un enrouleur de ceinture de sécurité (3) qui enroule ladite ceinture de sécurité (4) tout en permettant l'extraction de ladite ceinture de sécurité (4) et qui est activé dans le cas d'une situation d'urgence afin d'empêcher l'extraction de ladite ceinture de sécurité (4), une languette (6) qui est supportée de façon glissante par ladite ceinture de sécurité (4) extraite dudit enrouleur de ceinture de sécurité (3), et une boucle (7) qui est fixée au plancher d'un véhicule ou à un siège du véhicule (2) permettant un bouclage amovible avec ladite languette (6),
dans lequel ledit enrouleur de ceinture de sécurité (3) est un enrouleur de ceinture de sécurité (3) selon l'une quelconque des revendications 1 à 4.
